# EUROPÄISCHE PATENTSCHRIFT

(11) **EP 4 448 467 B1**
(45) Veröffentlichungstag und Bekanntmachung des Hinweises auf die Patenterteilung: **29.04.2026**
(21) Anmeldenummer: 21835772.1
(22) Anmeldetag: 16.12.2021
(51) Int. Cl.: C04B 28/18, E04C 5/07, E04C 5/01, C04B 9/20, C04B 9/00, C04B 7/36

(54) **BEWEHRTER MAGNESIUM-SILIKAT-HYDRATVERBUNDWERKSTOFF**
REINFORCED MAGNESIUM SILICATE HYDRATE COMPOSITE MATERIAL
MATÉRIAU COMPOSITE D'HYDRATE DE SILICATE DE MAGNÉSIUM RENFORCÉ

(43) Veröffentlichungstag der Anmeldung: 23.10.2024
(73) Patentinhaber: OLIMENT ® GmbH, 04571 Rötha OT Espenhain (DE)
(72) Erfinder: BELLMANN, Frank, 99425 Weimar (DE); LUDWIG, Horst-Michael, 99423 Weimar (DE)
(74) Vertreter: Wunderlich & Heim Patentanwälte PartG mbB
(86) Internationale Anmeldenummer: PCT/EP2021/086164
(87) Internationale Veröffentlichungsnummer: WO 2023/110102

(56) Entgegenhaltungen:
- EP-A1- 2 508 496
- EP-A1- 2 735 555
- WO-A1-2016/102197
- WO-A1-2017/075126
- WO-A1-2017/127454
- WO-A1-2017/222396
- WO-A1-2022/124996
- GB-A- 2 473 190
- US-A1- 2020 062 660
- BJORN MYHRE: "Cement-free Castables in the System MgO-SiO2: The effect of bond phase modifiers on strength", MICROWAVES: THEORY AND APPLICATION IN MATERIALS PROCESSING : [PROCEEDINGS OF THE SYMPOSIUM ON MICROWAVES: THEORY AND APPLICATION IN MATERIALS PROCESSING HELD DURING THE 93RD ANNUAL MEETING OF THE AMERICAN CERAMIC SOCIETY IN CINCINNATI, OH, APRIL 29 -, 29 April 1991 (1991-04-29), pages 1 - 16, XP002657338, ISBN: 978-0-944904-43-5

## Beschreibung

Die Erfindung betrifft einen Verbundwerkstoff aus Zementstein und Bewehrungsmitteln.

Die Verwendung von Stahlbeton ist für das Bauwesen in seiner gegenwärtigen Form unverzichtbar. Im Stahlbeton nimmt der Beton Druckspannungen auf, während die Bewehrungseinlagen aus Stahl für die Abtragung von Zugkräften verantwortlich sind. Gleichzeitig schützt der Beton den Stahl vor einer Korrosion. Dieser Korrosionsschutz beruht einem sehr hohen pH-Wert in der Porenlösung von Beton. Ab einem pH-Wert von etwa 11 rostet normaler Bewehrungsstahl nicht mehr, da sich auf der Oberfläche sehr dünne Passivierungsschichten bilden, die eine Abdichtung der Stahloberfläche gegen den Zutritt von Sauerstoff und Wasser bewirken und somit die Korrosion verhindern. In der Porenlösung von Betonen, die mit Zementen nach DIN EN 197 hergestellt werden, liegen pH-Werte über 12,5 vor und dementsprechend stellt die Verwendung dieser Zemente einen wirksamen Korrosionsschutz für Stahlbewehrung dar. Der Verbundbaustoff Stahlbeton hat eine hohe Leistungsfähigkeit und Dauerhaftigkeit bei geringen Kosten und wird aus diesen Gründen häufig verwendet. Allerdings ist die Herstellung des Bewehrungsstahles mit hohen Umweltwirkungen verbunden und dazu gehören hohe CO₂-Emissionen bei der Roheisen- und Stahlherstellung.

Zur Verminderung der Kohlendioxidemissionen bei der Herstellung der Bewehrung wurden verschiedene alternative Materialien vorgeschlagen. Dazu gehören insbesondere Karbon- und Glasfasern. Beide Materialien zeigen sehr hohe Zugfestigkeiten und können ebenfalls verwendet werden, um die Zugkräfte in bewehrtem Beton abzutragen. Ein weiterer Vorteil ist die Korrosionsbeständigkeit beider Fasertypen. Sowohl Karbon-, als auch Glasfasern reagieren normalerweise nicht mit Wasser und/oder Sauerstoff.

Allerdings können sich hohe pH-Werte schädlich für die Verbundwirkung und die Dauerhaftigkeit von Karbon- und/oder Glasfasern auswirken. Aus diesem Grund kann die Verwendung in Standardzementen nach DIN EN 197 zu Schwierigkeiten führen, da bei diesen Zementen hohe pH-Werte in der Porenlösung vorliegen. Bei Glasfasern können derartig hohe pH-Werte die Fasern anlösen und somit schwächen. Aus diesem Grund müssen Glassorten mit einer höheren chemischen Resistenz gegen Alkalien für den Einsatz als Bewehrung im Betonbau verwendet oder das Glas wird mit einer Schutzschicht vor dem direkten Kontakt mit der Porenlösung des Zementsteins geschützt. Bei Karbonfasern können die Kunststoffe beeinträchtigt werden, mit denen die einzelnen Karbonfasern untereinander verklebt sind. Bei beiden Bewehrungsarten können hohe pH-Werte also zu Schädigungen führen.

Aus der DE 2409231 A1 ist die Verwendung von Mineralfasern mit einem anorganischen Bindemittel wie Zement bekannt. Damit es hierbei nicht zu den oben beschriebenen Problemen kommt, wird vorgeschlagen, den pH-Wert durch eine zusätzliche Behandlung mit CO₂ zu senken.

Ferner ist aus der US 5,002,610 ein Bindemittel auf Basis von Magnesiumoxid und Aluminiumphosphat bekannt, welches sehr schnell erhärtet. Jedoch ist das Herstellungsverfahren äußerst kompliziert und fordert mehrfache Trocknung und Mahlung und erneute Mischung verschiedener Bestandteile.

Die EP 2 508 496 A1 beschreibt eine Bindemittelzusammensetzung, die Magnesiumoxid, reaktive Kieselsäure (SiO₂) und ein hydratisiertes Magnesiumcarbonat aufweist. Durch die Reaktion mit Wasser kann sich Magnesiumsilikathydrat bilden, was die Zusammensetzung für Anwendungen im Bauwesen mit potenziell günstigen Festigkeitseigenschaften und CO₂-Bilanz geeignet erscheinen lässt.

Der Erfindung liegt daher die **Aufgabe** zugrunde, einen Verbundwerkstoff anzugeben, der als Bewehrungsmittel Karbon-, Glasfasern aber auch Stahlbewehrungen aufweisen kann.

Diese Aufgabe wird erfindungsgemäß durch einen Verbundwerkstoff mit den Merkmalen des Anspruchs 1 gelöst.

Weiter vorteilhafte Ausführungen sind in den abhängigen Ansprüchen, der weiteren Beschreibung und den Ausführungsbeispielen angegeben.

Entsprechend Anspruch 1 ist vorgesehen, dass der erfindungsgemäße Verbundwerkstoff Zementstein aus MgO-basierten Bindemitteln und/oder olivinbasierten Bindemitteln aufweist. Die olivinbasierten Bindemittel verwenden als Ausgangsmaterial eine Forsteritquelle in Form einer natürlichen oder künstlichen Olivinquelle und/oder in Form von getemperten Serpentinit. Im Sinne der Erfindung kann unter getempertem Serpentinit insbesondere Serpentinit verstanden, welcher auf eine Temperatur von mindestens 500°C erhitzt wurde. Anstelle des Fachbegriffs "getempert" wird oft auch "kalziniert" verwendet.

Ferner weist der erfindungsgemäße Verbundwerkstoff Bewehrungsmittel gemäß dem Anspruch 1 auf.

Ein Grundgedanke der Erfindung kann darin gesehen werden, von bekannten portlandzementbasierten Zementen abzuweichen, die einen relativ hohen pH-Wert aufweisen. Erfindungsgemäß wurde erkannt, dass die Porenlösung eines Zementsteins aus MgO- oder einem olivinbasierten Bindemittel, wie es entsprechend der Erfindung verstanden wird, meist pH-Werte von unter 11 aufweist. Hierdurch können Bewehrungsmittel aus Glasfasern beziehungsweise Kohlenstofffasern oder Kombinationen von beiden verwendet werden, die ohne weite Behandlung gegen Medien bei pH-Werten von über 11 nicht stabil sind.

Möchte man andere Bewehrungsmittel verwenden, so ist es erfindungsgemäß, diese mit einem Schutz gegen die in der Porenlösung des erfindungsgemäßen Zementsteins vorliegenden pH-Werte von unter 11 auszustatten.

Als Alternative oder zusätzlich hierzu, kann je nach verwendetem Bewehrungsmittel dem MgO- und/oder olivinbasiertes Bindemittel andere Mittel zum Anheben des pH-Wertes der Porenlösung auf einen pH-Wert auf oder 11 zugegeben werden. Hierfür kann beispielsweise Löschkalk, Brandkalk, Alkalinen wie Natriumhydroxid oder Kaliumhydroxid, CKD (cement kiln dust, Ofenstäube aus der Zementherstellung) zugegeben werden.

Zumindest bei der Verwendung von getempertem Serpentinit im Ausgangsprodukt, bevorzugt aber auch bei einer natürlichen oder künstliche Olivinquelle, sollte das Ausgangsprodukt frei von Alit und Belit frei, da diese Erhärtungsstörungen bedingen können. Ein Herstellungsverfahren für Zementstein aus einem MgO- und/oder Olivin basierten Bindemittel ist beispielsweise in PCT/EP2021/061726 beschreiben.

Vorteilhaft ist es, wenn die Porenlösung des Zementsteins einen pH-Wert von 11 oder niedriger aufweist. Dies ist insbesondere der Fall, wenn der erfindungsgemäße Zementstein aus einem MgO- und/oder olivinbasierten Bindemittel besteht. Auf diese Weise müssen keine weiteren Anpassungen an den Ausgangsstoff des Zementsteins für die Verwendung mit Bewehrungsmitteln aus Glasfasern und/oder Kohlestofffasern herangezogen werden.

Vorteilhaft ist es, wenn das MgO-basiertes Bindemittel oder olivinbasiertes Bindemittel MgO und SiO₂, MgO und MgCO₃, MgO und Glasmehl, Olivin und SiO₂, Olivin und Glasmehl, Olivin und Trass, Olivin und Pozzolan, getemperten Serpentinit und SiO₂, getemperten Serpentinit und Glasmehl und/oder einzeln oder Kombinationen hiervon aufweist. Durch die Verwendung dieser Aufgangsstoffe kann ein Zementstein hergestellt werden, der eine gute Festigkeit im Vergleich zu Mischungen basierend auf Portlandzement aufweist und dennoch einen pH-Wert von 11 oder niedriger hat.

Trass ist ein natürliches Puzzolan, welches hauptsächlich aus Silicium- und Aluminiumverbindungen besteht. Puzzolane sind künstliche oder natürliche Gesteine aus Siliciumdioxid, Tonerde, Kalkstein, Eisenoxid und alkalischen Stoffen, die zumeist unter Hitzeeinwirkung entstanden sind. In Verbindung mit Calciumhydroxid und Wasser sind sie bindefähig.

Grundsätzlich können beliebige Bewehrungsmittel entsprechend der Erfindung verwendet werden. Erfindungsgemäß ist es jedoch, wenn die Bewehrungsmittel Karbonbeziehungsweise Kohlenstoff- und/oder Glasfasern aufweisen. Diese Fasern haben gegenüber herkömmlichen Stahlbewehrungen den Vorteil, dass sie zum einen leichter sind und zum anderen bei ihrer Produktion deutlich weniger CO₂ entsteht.

Vorteilhaft ist es, wenn die Bewehrungsmittel schutzschichtlos zum Widerstand gegen pH-Werte von unter 11 ausgebildet sind. Dies ist insbesondere bei Bewehrungsmittel aus Karbon- und/oder Glasfaser möglich. Grundsätzlich kann jedoch auch eine Schutzschicht gegen derartig niedrige pH-Werte aufgebracht werden.

Es ist weiter vorteilhaft, wenn die Karbon- und/oder Glasfasern in Form von Faserbewehrungen, Mattenbewehrungen, Stabbewehrungen und anderen Bewehrungsformen ausgebildet sind. Der Vorteil bei der Verwendung von Karbon- und/oder Glasfasern ist, dass diese in jede beliebige Form gebracht werden können und anschließend zum Herstellen des Verbundwerkstoffes verwendet werden können. Hierdurch kann abhängig von der zu erwartenden Belastung eine optimale Form der Bewehrung vorgesehen sein.

In einer weiteren erfindungsgemäßen Ausführungsform können auch alternativ oder zusätzlich Stahlbewehrungen in dem erfindungsgemäßen Verbundwerkstoff vorhanden sein. Wenn diese eingesetzt werden, ist es bevorzugt, dem Zementstein zusätzlich zum MgO- und/oder olivinbasierten Bindemittel insbesondere Portlandzementklinker zuzugeben. Dieser eignet sich besonders zum Erhöhen des pH-Wertes, so dass eine Korrosion von Stahlbewehrung aufgrund des niedrigen pH-Wertes verhindert wird. Zusätzlich bietet Portlandzementklinker im Vergleich zu anderen Stoffen, die den pH-Wert beeinflussen, den Vorteil, dass er einen eigenen separaten Beitrag zur Festigkeit liefert.

Außerdem ist es vorgesehen sein, dass die Bewehrungsmittel mindestens eine Schutzschicht zum Schutz gegen ein alkalisches Milieu mit einem pH-Wert von unter 11 aufweisten. Diese Schutzschicht ist beispielsweise durch Auftragen von Farbe und/oder Lack angebracht. Die Schutzschicht kann kunststoffbasiert sein. Eine andere erfindungsgemäße Möglichkeit ist es, eine Feuerverzinkung auf Stahlbewehrungen aufzubringen.

Zur Verifikation der Erfindung wurde die Porenlösung von zwei erfindungsgemäßen Bindemitteln nach sechs Monaten Hydratation näher untersucht.

Zum einen wurde ein Bindemittel aus reinem synthetischen Forsterit ohne Fremdionen analysiert. In einer zweiten Probe wurde anstelle des reinen Forsterits eine Mischung aus Forsterit und Kieselglas im Verhältnis von 2:1 zum Herstellen des Zementstein des Verbundwerkstoffes verwendet.

Nach einem halben Jahr Hydratation betrug der pH-Wert in der ersten Probe 9,5 und in der zweiten Probe lag der pH-Wert sogar im Bereich von 8,2.

Demnach kann durch den Einsatz von Forsterit, welches zur Olivin-Gruppe gehört, ein Bindemittel für einen Verbundwerkstoff hergestellt werden, welches einen sehr geringen pH-Wert im Vergleich zu Zementstein aus klassischem Portlandzementklinker aufweist. Durch diesen geringen pH-Wert können erstmalig ohne weitere Vorbehandlung Glas- und/oder Karbonfaserbewehrungen verwendet werden.

Mit dem erfindungsgemäßen Verbundwerkstoff ist es so möglich, auf die Verwendung von Stahlbewehrungen, die bei Ihrer Herstellung einen sehr hohen CO₂-Ausstoß haben, zu verzichten.

## Patentansprüche

1. Verbundwerkstoff aufweisend:
Zementstein aus einem MgO-basierten Bindemittel und/oder Olivin basierten Bindemittel, welches als Ausgangsmaterial eine Forsteritquelle in Form einer natürlichen oder künstlichen Olivinquelle und/oder in Form von getempertem Serpentinit aufweist, sowie
Bewehrungsmittel zum Erhöhen der Tragfähigkeit, wobei die Bewehrungsmittel
- Karbon- und/oder Glasfasern aufweisen, die beständig gegen pH-Werte von unter 11 sind und/oder
- Stahlbewehrungen, welche feuerverzinkt sind und/oder eine Farb- oder Lackschicht aufweisen, wodurch sie einen Schutz gegen pH-Werte von unter 11 aufweisen.

2. Verbundwerkstoff nach Anspruch 1,
**dadurch gekennzeichnet,**
**dass** die Porenlösung des Zementsteines einen pH-Wert von 11 oder niedriger aufweist.

3. Verbundwerkstoff nach Anspruch 1 oder 2,
**dadurch gekennzeichnet,**
**dass** das MgO-basierte Bindemittel und/oder das Olivin basierte Bindemittel MgO und SiO₂, MgO und MgCO₃, MgO und Glasmehl, Olivin und SiO₂, Olivin und Glasmehl, Olivin und Trass, Olivin und Puzzolan, getemperter Serpentinit und SiO₂, getemperter Serpentinit und Glasmehl oder Kombinationen davon aufweist.

4. Verbundwerkstoff nach einem der Ansprüche 1 bis 3,
**dadurch gekennzeichnet,**
**dass** die Karbon- und/oder Glasfasern in Form von Faserbewehrung, Mattenbewehrung, Stabbewehrungen und/oder anderen Bewehrungsformen ausgebildet sind.

5. Verbundwerkstoff nach einem der Ansprüche 1 bis 4,
**dadurch gekennzeichnet,**
**dass** dem Zementstein zum Herstellen zusätzlich zum MgO-basierten Bindemittel und/oder Olivin basierten Bindemittel Portlandzementklinker zugegeben ist.

6. Verbundwerkstoff nach einem der Ansprüche 1 bis 5,
**dadurch gekennzeichnet,**
**dass** die Bewehrungsmittel als Farb- oder Lackschicht eine Farb- oder Lackschicht aus Kunststoff, aufweisen, zum Schutz gegen ein alkalisches Milieu mit einem pH-Wert von unter 11.

## Claims

1. Composite material, comprising:
cement stone composed of an MgO-based binder and/or olivine-based binder, which comprises, as a starting material, a forsterite source in the form of a natural or artificial olivine source and/or in the form of tempered serpentinite, as well as
reinforcing elements for increasing the load-bearing capacity, wherein the reinforcing elements
- comprise carbon fibers and/or glass fibers which are resistant to pH values below 11, and/or
- steel reinforcements, which are hot-dipped and/or comprise a layer of paint or varnish, whereby they have protection against pH values of less than 11.

2. Composite material according to claim 1,
**characterized in that**
the pore solution of the cement stone has a pH value of 11 or lower.

3. Composite material according to claim 1 or 2,
**characterized in that**
the MgO-based binder and/or olivine-based binder comprises MgO and SiO₂, MgO and MgCO₃, MgO and glass powder, olivine and SiO₂, olivine and glass powder, olivine and trass, olivine and pozzolan, tempered serpentinite and SiO₂, tempered serpentinite and glass powder, or combinations thereof.

4. Composite material according to any one of claims 1 to 3,
**characterized in that**
the carbon fiber and/or glass fibers are in the form of fiber reinforcement, mat reinforcement, bar reinforcements and/or other forms of reinforcement.

5. Composite material according to any one of claims 1 to 4,
**characterized in that**
a binder that comprises Portland cement clinker is added to the cement stone for producing, in addition to the MgO-based binder and/or olivine-based binder.

6. Composite material according to any one of claims 1 to 5,
**characterized in that**
the reinforcing elements as paint or varnish layer comprise a layer of paint or varnish made of plastic, for protection against an alkaline environment with a pH value of less than 11.

## Revendications

1. Matériau composite comprenant :
une matrice cimentaire issue d'un liant à base de MgO et/ou d'un liant à base d'olivine, lequel présente comme matière première une source de forstérite sous forme d'une source d'olivine naturelle ou artificielle et/ou sous forme de serpentinite tempérée, ainsi que
des moyens de renforcement pour augmenter la capacité portante, les moyens de renforcement comprenant des fibres de carbone et/ou des fibres de verre, résistantes à des valeurs de pH inférieures à 11 et/ou
des armatures en acier, lesquelles sont galvanisées à chaud et/ou présentent une couche de peinture ou de vernis, grâce à quoi elles présentent une protection contre des valeurs de pH inférieures à 11.

2. Matériau composite selon la revendication 1,
**caractérisé en ce que**
la solution interstitielle de la matrice cimentaire présente une valeur de pH de 11 ou inférieure.

3. Matériau composite selon la revendication 1 ou 2,
**caractérisé en ce que**
le liant à base de MgO et/ou le liant à base d'olivine comprend MgO et SiO₂, MgO et MgCO₃, MgO et farine de verre, olivine et SiO₂, olivine et farine de verre, olivine et trass, olivine et pouzzolane, serpentinite tempérée et SiO₂, serpentinite tempérée et farine de verre ou des combinaisons de ceux-ci.

4. Matériau composite selon l'une quelconque des revendications 1 à 3,
**caractérisé en ce que**
les fibres de carbone et/ou les fibres de verre sont réalisées sous forme de renforcement par fibres, de renforcement par nappes, d'armatures en barres et/ou d'autres formes d'armatures.

5. Matériau composite selon l'une quelconque des revendications 1 à 4,
**caractérisé en ce que**
du clinker de ciment Portland est ajouté à la matrice cimentaire pour la fabrication en plus du liant à base de MgO et/ou du liant à base d'olivine.

6. Matériau composite selon l'une quelconque des revendications 1 à 5,
**caractérisé en ce que**
les moyens de renforcement présentent, en tant que couche de peinture ou de vernis, une couche de peinture ou de vernis en matière plastique pour la protection contre un milieu alcalin présentant une valeur de pH inférieure à 11.
